(19) **Europäisches Patentamt / European Patent Office / Office européen des brevets**

(11) **EP 4 712 163 A1**

(12) **EUROPEAN PATENT APPLICATION**
published in accordance with Art. 153(4) EPC

(43) Date of publication:
**18.03.2026 Bulletin 2026/12**

(21) Application number: **24880251.4**

(22) Date of filing: **18.10.2024**

(51) International Patent Classification (IPC):
$H01M\ 4/38^{(2006.01)}$    $H01M\ 4/48^{(2010.01)}$
$H01M\ 4/62^{(2006.01)}$    $H01M\ 4/134^{(2010.01)}$
$C01B\ 33/113^{(2006.01)}$    $H01M\ 10/052^{(2010.01)}$
$H01M\ 4/02^{(2006.01)}$

(52) Cooperative Patent Classification (CPC):
C01B 33/113; H01M 4/02; H01M 4/134; H01M 4/38;
H01M 4/48; H01M 4/62; H01M 10/052; Y02E 60/10

(86) International application number:
**PCT/KR2024/096381**

(87) International publication number:
**WO 2025/084915 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 20.10.2023 KR 20230140879
17.10.2024 KR 20240141721

(71) Applicant: **LG Energy Solution, Ltd.**
**Seoul 07335 (KR)**

(72) Inventors:
• **JUN, Hyunmin**
**Daejeon 34122 (KR)**
• **KIM, Donghyuk**
**Daejeon 34122 (KR)**
• **LEE, Yong Ju**
**Daejeon 34122 (KR)**

(74) Representative: **Hoffmann Eitle**
**Patent- und Rechtsanwälte PartmbB**
**Arabellastraße 30**
**81925 München (DE)**

(54) **ANODE ACTIVE MATERIAL, METHOD FOR PREPARING ANODE ACTIVE MATERIAL, ANODE COMPOSITION, LITHIUM SECONDARY BATTERY ANODE COMPRISING SAME, AND LITHIUM SECONDARY BATTERY COMPRISING ANODE**

(57) The present application relates to a negative electrode active material, a method for manufacturing a negative electrode active material, a negative electrode composition, a negative electrode for a lithium secondary battery including the same, and a lithium secondary battery including a negative electrode.

[Figure 1]

EP 4 712 163 A1

**Description**

[Technical Field]

This application claims priority to and the benefit of Korean Patent Application No. 10-2023-0140879 filed in the Korean Intellectual Property Office on October 20, 2023, the entire contents of which are incorporated herein by reference.
The present application relates to a negative electrode active material, a method for manufacturing a negative electrode active material, a negative electrode composition, a negative electrode for a lithium secondary battery including the same, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.
At present, a secondary battery is a representative example of an electrochemical device that uses such electrochemical energy, and the specified range of use thereof tends to be gradually expanding.
Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.
In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.
In particular, due to the demand for high-density energy batteries in recent years, research is being actively conducted on methods to increase a capacity by using together a silicon-based compound, such as Si/C and SiOx, having a capacity 10 times or more than that of a graphite-based material, as a negative electrode active material. However, compared with graphite, which is typically used, a silicon-based compound that is a high-capacity material has a large capacity but undergoes rapid volume expansion during charging, thereby disconnecting a conductive path to degrade battery characteristics.
Accordingly, in order to solve problems occurring when the silicon-based compound is used as the negative electrode active material, methods of suppressing the volume expansion itself, such as a method of controlling a driving potential, a method of additionally further coating a thin film on an active material layer, and a method of controlling a particle diameter of a silicon-based compound, or various methods for preventing a conductive path from being disconnected have been discussed. However, such methods may rather deteriorate the performance of a battery, and thus, the application thereof is limited, so that there is still a limitation in commercializing the manufacture of a battery including a negative electrode with a high content of a silicon-based compound.
Additionally, silicon-based active materials exhibit very high reactivity, causing non-uniformity in reactions between upper and lower ends of the electrode. That is, for silicon-based negative electrodes, lithium ions undergo rapid reactions on the surface, leading to a concentration of reactions at the upper end portion of the electrode, which results in non-uniform reaction and problems with life characteristics such as delamination at the upper end portion of the electrode.
In particular, for silicon-based negative electrodes, when $FeSi_2$, which becomes more electrochemically inactive as metal impurities increase, is present as an obstacle in the electrode, it further hinders the diffusion of the lithium ions. This leads to concentrated reactions occurring only in the silicon-based active material in the upper layer portion of the electrode, resulting in a problem of reduced life performance.
Additionally, HF generated from a reaction of $LiPF_6$ and $H_2O$ in a cell may attack metal foreign materials included in the NCMA active material of the positive electrode or the silicon-based active material, resulting in the problem of elution of metal ions. That is, if metal foreign materials are present in the positive electrode, they undergo oxidation reactions to form metal ions, which then chelate with the electrolyte solution and migrate toward the negative electrode. On the negative electrode, they undergo reduction reactions, leading to precipitation of metal on the negative electrode surface. As this process repeats, the precipitates grow and eventually penetrate the separator, resulting in problems such as cell short-circuits or low voltage.
Accordingly, for silicon-based active materials, methods such as using magnetic force to remove metal foreign materials during the manufacturing process are being studied. However, the above-described problems occur because metal foreign materials are mixed during the manufacturing process of silicon-based active materials, or metals with weak magnetic force present within a material itself remain unremoved.

Therefore, research is being conducted to effectively remove metal impurities and solve the above-described problems when applying a silicon-based negative electrode.

Prior Art Document

Japanese Patent Application Publication No. 2009-080971

[Detailed Description of the Invention]

[Technical Problem]

When using a silicon-based negative electrode, metal foreign materials in the negative electrode active material are eluted in the form of metal ions upon exposure to HF generated inside the cell, and the metal ions later precipitate, causing problems. As a result of research to solve this problem, it was found that it is difficult to remove metal foreign materials simply by using the magnetic force, and that this is due to the mixing of metal components caused by friction between the machine and the silicon material during the pulverization process of silicon-based raw materials, or the inclusion of metal components with weak magnetic force in silicon-based active materials.

Accordingly, the efficient removal of the metal components was studied, and it was found through the study that when the silicon-based active material is subjected to a cleaning process using two or more types of acids during the manufacturing process of the negative electrode active material, the metal components are effectively removed, and the Si-Fe phase or Si-Fe-Ti phase, which causes problems such as short-circuits or dendrites, is efficiently removed.

Accordingly, the present application relates to a negative electrode active material, a method for manufacturing a negative electrode active material, a negative electrode composition, a negative electrode for a lithium secondary battery including the same, and a lithium secondary battery including a negative electrode capable of solving the above-described problems.

[Technical Solution]

An exemplary embodiment of the present specification provides a negative electrode active material including a silicon-based active material and a metal impurity, in which a proportion of a Si-Fe phase or a Si-Fe-Ti phase based on 100% of a total phase of the silicon-based active material and metal impurity included in the negative electrode active material is 2% or less.

Another exemplary embodiment provides a method for manufacturing a negative electrode active material, the method including: preparing a silicon raw material; pulverizing the silicon raw material; and acid-cleaning the pulverized silicon raw material, in which the acid-cleaning includes adding an acid to the pulverized silicon raw material, and the acid is a mixture of two or more different types of acids.

Still another exemplary embodiment provides a negative electrode composition including: the negative electrode active material according to the present application; a negative electrode conductive material; and a negative electrode binder.

Yet another exemplary embodiment provides a negative electrode for a lithium secondary battery including: a negative electrode current collector layer; and a negative electrode active material layer provided on one surface or both surfaces of the negative electrode current collector layer, wherein the negative electrode active material layer includes the negative electrode composition according to the present application or a cured product thereof.

Finally, there is provided a lithium secondary battery including a positive electrode; the negative electrode for a lithium secondary battery according to the present application; a separator provided between the positive electrode and the negative electrode; and an electrolyte.

[Advantageous Effects]

A negative electrode active material according to an exemplary embodiment of the present invention has such features that the content of metal impurity is low to a certain range or less, and at the same time, the proportion of the Si-Fe phase or Si-Fe-Ti phase based on 100% of the total phase of the silicon-based active material and metal impurity included in the negative electrode active material is controlled to 2% or less. That is, the proportion of the metal impurity having the specified phase is within the above range, thereby preventing cell short-circuits caused by precipitation of metal foreign materials.

In addition, for silicon-based active materials, it is important to simplify a lithium-ion pathway (tortuosity). The Si-Fe phase or the Si-Fe-Ti phase corresponds to an electrochemically inactive phase and is present as an obstacle in the electrode. However, the negative electrode active material according to the present application undergoes a cleaning process using two or more types of acids and satisfies the above-mentioned proportion. As a result, silicon in the upper layer portion of the electrode is not concentratedly used, and lithium ions can diffuse well to the vicinity of the current collector of the electrode, leading to an improvement in the life performance of the negative electrode.

Additionally, the Si-Fe phase or Si-Fe-Ti phase, when included in the silicon-based active material, causes a problem of a decrease in the capacity per gram of the silicon-based active material itself. However, in the case of the negative electrode active material according to the present application, no decrease in the capacity per gram of the silicon-based active material itself occurs, thereby enabling high energy density, increased life, and suppression of dendrite formation.

[Brief Description of Drawings]

FIG. 1 is a view showing a stack structure of a negative electrode for a lithium secondary battery according to an exemplary embodiment of the present application.
FIG. 2 is a view showing a stack structure of a lithium secondary battery according to an exemplary embodiment of the present application.
FIG. 3 is a diagram showing EDS analysis images according to Example 1.
FIG. 4 is a diagram showing EDS analysis images according to Comparative Example 1.

<Explanation of Reference Numerals and Symbols>

10: negative electrode current collector layer
20: negative electrode active material layer
30: separator
40: positive electrode active material layer 50: positive electrode current collector layer 100: negative electrode for lithium secondary battery
200: positive electrode for lithium secondary battery

[Best Mode]

Before describing the present invention, some terms are first defined.
When one part "includes", "comprises" or "has" one constituent element in the present specification, unless otherwise specifically described, this does not mean that another constituent element is excluded, but means that another constituent element may be further included.
In the present specification, 'p to q' means a range of 'p or more and q or less'.
In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.
In the present specification, "Dn" refers to a particle size distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.
In an exemplary embodiment of the present application, the particle size or particle diameter may mean an average diameter or representative diameter of each crystal grain constituting the metal powder.
In the present specification, the description "a polymer includes a certain monomer as a monomer unit" means that the monomer participates in a polymerization reaction and is included as a repeating unit in the polymer. In the present specification, when a polymer includes a monomer, this is interpreted to be the same as when the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, the molecular weight refers to a weight average molecular weight unless particularly described otherwise.

Hereinafter, exemplary embodiments of the present invention will be described in detail with reference to the drawings so that one skilled in the art can readily implement the present invention. However, the present invention may be implemented in various different forms, and is not limited to the following descriptions.

An exemplary embodiment of the present specification provides a negative electrode active material including a silicon-based active material and a metal impurity, in which a proportion of a Si-Fe phase or a Si-Fe-Ti phase based on 100% of a total phase of the silicon-based active material and metal impurity included in the negative electrode active material is 2% or less.

A negative electrode active material according to an exemplary embodiment of the present invention has the proportion of the metal impurity having the specified phase controlled to fall within the above range, thereby preventing cell short-circuits caused by precipitation of metal foreign materials, ensuring a lithium-ion pathway to enhance life performance, and enabling provision of a negative electrode with a high energy density through increased capacity of the negative electrode active material itself.

The present application provides a negative electrode active material including a silicon-based active material and a metal impurity.

In an exemplary embodiment of the present application, there is provided the negative electrode active material in which the silicon-based active material includes $SiO_x$ (x=0), $SiO_x$ (0 < x < 2), a SiC composite or a Si alloy.

That is, any type of silicon-based active material can be included without limitation.
In the present specification, the SiC composite is a silicon carbon composite, i.e., a composite of Si and C, and is distinguished from silicon carbide denoted as SiC. The silicon carbide does not react electrochemically with lithium, so all performance, including life, may be measured as 0.

In the present application, the silicon-based active material may be a SiC composite including porous carbon and silicon deposited on the porous carbon.

The SiC composite may be a composite of silicon, graphite, and the like, and may form a structure in which a core composite of silicon, graphite, and the like is surrounded by graphene, amorphous carbon, or the like. In the SiC composite, silicon may be nano silicon. For example, the nano silicon may be silicon within a range of 1 nm to 999 nm.

According to an exemplary embodiment of the present specification, the $SiO_x$ (0 < x < 2) can be expressed as silicon oxide. In this case, the $SiO_x$ (0 < x < 2) corresponds to an amorphous matrix within the silicon oxide particles. The $SiO_x$ (0 < x < 2) may be present in a form that includes some Si and $SiO_2$, and the Si may form a phase. That is, the x corresponds to the number ratio of O to Si contained in the $SiO_x$ (0 < x < 2). When the silicon oxide particle includes $SiO_x$ (0 < x < 2), the discharge capacity of the secondary battery can be improved.

In an exemplary embodiment of the present application, the silicon-based active material may include one or more selected from the group consisting of $SiO_x$ (x=0) and $SiO_x$ (0 < x < 2), and may include the $SiO_x$ (x=0) in an amount of 70 parts by weight or more based on 100 parts by weight of the silicon-based active material.

In an exemplary embodiment of the present application, the silicon-based active material may include $SiO_x$ (x=0), and include 70 parts by weight or more of $SiO_x$ (x=0) based on 100 parts by weight of the silicon-based active material.

In another exemplary embodiment, $SiO_x$ (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less based on 100 parts by weight of the silicon-based active material.

In an exemplary embodiment of the present application, pure silicon (Si) particles may be particularly used as the silicon-based active material. The use of pure silicon (Si) particles as the silicon-based active material may mean that, based on 100 parts by weight of the total silicon-based active material as described above, pure Si particles ($SiO_x$ (x=0)) not bonded to other particles or elements are included within the above range.

In an exemplary embodiment of the present application, the silicon-based active material may be formed of silicon-based particles having 100 parts by weight of $SiO_x$ (x=0) based on 100 parts by weight of the silicon-based active material.

Note that an average particle diameter (D50) of the silicon-based active material of the present invention may be 1 $\mu$m to 10 $\mu$m, specifically 2 $\mu$m to 7 $\mu$m, and more specifically 4 $\mu$m to 5 $\mu$m. If the average particle diameter falls below the range, the specific surface area of the particle increases excessively, causing the viscosity of the negative electrode slurry to increase excessively. Consequently, the particles constituting the negative electrode slurry are not smoothly dispersed.

In addition, if the size of the silicon-based active material is too small, the same porosity is maintained, which deteriorates straightness (tortuosity) of lithium-ion diffusion. This makes it difficult to charge and discharge at the lower end of the electrode, resulting in a reduced capacity retention rate of the battery. On the other hand, if the average particle diameter exceeds the range, excessively large silicon-based particles are present, resulting in an uneven surface of the negative electrode, which in turn causes a non-uniform current density during charging and discharging. Additionally, if the silicon-based particles are excessively large, the phase stability of the negative electrode slurry becomes unstable, resulting in degraded processability. As a result, the capacity retention rate of the battery decreases.

In the exemplary embodiment of the present application, the silicon-based active material generally has a characteristic BET specific surface area. The BET specific surface area of the silicon-based active material is preferably 10 $m^2$/g or greater and 40 $m^2$/g or less, more preferably 15 $m^2$/g to 35 $m^2$/g, especially preferably 20 $m^2$/g to 30 $m^2$/g, and most preferably 25 $m^2$/g to 30 $m^2$/g. The BET specific surface area is measured in accordance with DIN 66131 (using nitrogen).

A silicon-based active material with a large specific surface area can increase the reaction uniformity of the material and prevent particle breakage caused by volume change during charging and discharging. However, the large specific surface area leads to formation of numerous SEI layers on the surface of the silicon-based active material, which consumes a large amount of available lithium in the cell and causes the life performance of the cell to deteriorate. In contrast, the specific surface area falling within the above range can prevent the above-described problems.

In an exemplary embodiment of the present application, the silicon-based active material may be present, for example, in a crystalline or amorphous form, and is preferably not porous. The silicon-based particles are preferably spherical or fragment-shaped particles. Alternatively, but less preferably, the silicon-based particles may also have a fiber structure or be present in the form of a silicon-containing film or coating.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the circularity is determined by Formula 1 below, in which A is an area and P is a boundary line.

[Formula 1]

$$4\pi A/P^2$$

In an exemplary embodiment of the present application, the crystal grain size of the silicon-based active material may be 1 nm or greater and 200 nm or less.

In another exemplary embodiment, the crystal grain size of the silicon-based active material may be 150 nm or less, 100 nm or less, 90 nm or less, or 80 nm or less, and may be 1 nm or greater, 5 nm or greater, 7 nm or greater, or 10 nm or greater.

In another exemplary embodiment, the silicon-based active material may have a crystal grain size of 10 nm or greater and 80 nm or less.

In this case, the crystal grain size of the silicon active material may refer to the crystal grain size of the Si particles included in the silicon active material.

The silicon-based active material has the above crystal grain size, and satisfies the above range, enabling numerous grain boundaries to be distributed inside the particles. Consequently, when lithium ions are intercalated, they are uniformly intercalated, thereby reducing the stress applied to the silicon particles during the intercalation of lithium ions, and thus alleviating particle breakage. As a result, characteristics capable of improving the service life stability of the negative electrode are obtained. If the crystal grain size exceeds the above range, the crystal grain boundaries within the particles are narrowly distributed, and in this case, lithium ions are non-uniformly intercalated into the particles, leading to large stress during the intercalation of ions, and accordingly, breakage of particles.

In the present application, the crystal grain refers to a crystal particle in a metal or material, which is a collection of microscopically irregular shapes, and the crystal grain size may refer to a diameter of the observed crystal grain particle. That is, in the present application, the crystal grain size means a size of a domain sharing the same crystal direction in a particle, and has a different concept from a particle size or a size of a particle diameter expressing a size of a material.

In an exemplary embodiment of the present application, the crystal grain size may be calculated as a value of full width at half maximum (FWHM) through XRD analysis. The remaining values except L are measured through XRD analysis of the silicon-based active material, and the crystal grain size can be measured through the Debey-Scherrer equation showing that the FWHM and the crystal grain size are in inverse ratio. The Debey-Scherrer equation is as shown in Formula 1-1 below.

[Formula 1-1]

$$FWHM = K\lambda / LCos\theta$$

In Formula 1-1 above, L is a crystal grain size, K is a constant, $\theta$ is a Bragg angle, and $\lambda$ is a wavelength of X-ray.

In addition, the shapes of the crystal grains are diverse and can be measured in three dimensions. In general, the size of the crystal grain can be measured by a generally used circle method or diameter measurement method, but no such limitation is intended.

In the diameter measurement method, the size of the crystal grain can be measured by drawing 5 to 10 parallel lines each having a length of L mm on a micrograph of a target particle, counting the number of crystal grains z on each line, and averaging them. In this case, only crystal grains that are wholly included on the line are counted, and crystal grains that are partially put on (laid across) the line are excluded. When the number of lines is P and the magnification is V, the average particle diameter can be calculated by Formula 1-2 below.

[Formula 1-2]

$$Dm = (L*P*10^3)/(zV) \quad (um)$$

In addition, the circle method is a method in which a circle with a predetermined diameter is drawn on a micrograph of a target particle, and then an average area of crystal grains is calculated by the number of crystal grains within the circle and the number of crystal grains laid across the boundary line, and the average area can be calculated by the following Formula 1-3.

[Formula 1-3]

$$Fm = (Fk * 10^6) / ((0.67n + z) V^2) \quad (um^2)$$

In Formula 1-3, Fm is an average particle area, Fk is a measurement area on the photograph, z is the number of particles in a circle, n is the number of particles laid across the circle, and V is a magnification of a microscope.

In an exemplary embodiment of the present application, there is provided a negative electrode active material in which the silicon-based active material is a single crystal silicon-based active material or a polycrystalline silicon-based active material.

In an exemplary embodiment of the present application, the silicon-based active material may be a single crystal silicon-based active material.

In an exemplary embodiment of the present application, the silicon-based active material may be a polycrystalline silicon-based active material.

In the present application, there is provided the negative electrode active material in which the metal impurity is included in an amount of 0.2 part by weight or less based on 100 parts by weight of the negative electrode active material.

In another exemplary embodiment, the metal impurity may be included in an amount of 0.2 part by weight or less, 0.19 part by weight or less, or 0.18 part by weight or less, and 0.01 part by weight or more, or 0.03 part by weight or more, based on 100 parts by weight of the negative electrode active material.

In the present application, in the case of the metal impurity, electrochemically inactive $FeSi_2$ is present as an obstacle in the electrode, further hindering the diffusion of the lithium ions. This leads to concentrated reactions occurring only in the silicon-based active material in the upper layer portion of the electrode, resulting in a problem of reduced life performance.

Additionally, HF generated from a reaction of $LiPF_6$ and $H_2O$ in a cell may attack metal foreign materials included in the NCMA active material of the positive electrode or the silicon-based active material, resulting in the problem of elution of metal ions. That is, if metal foreign materials are present in the positive electrode, they undergo oxidation reactions to form metal ions, which then chelate with the electrolyte solution and migrate toward the negative electrode. On the negative electrode, they undergo reduction reactions, leading to precipitation of metal on the negative electrode surface. As this process repeats, the precipitates grow and eventually penetrate the separator, resulting in problems such as cell short-circuits or low voltage.

The negative electrode active material according to the present application solves the above problems by effectively removing a metal impurity, particularly an impurity of a specific phase, through the manufacturing process described below.

In an exemplary embodiment of the present application, the metal impurity is a metal impurity that may generally be included and, specifically, may include one or more selected from the group consisting of Fe, Al, Ca, Ti, Zn, Ni, Cu, Cr, Co, Mg, Sn, Ba, Zr and Mn.

In the present application, the metal impurity may include one or more selected from the group consisting of Fe, Al, and Ca.

In the present application, a proportion of a Si-Fe phase or a Si-Fe-Ti phase based on 100% of a total phase of the silicon-based active material and metal impurity included in the negative electrode active material may be 2% or less.

In the present application, a proportion of the Si-Fe phase based on 100% of the total phase of the silicon-based active material and metal impurity included in the negative electrode active material may be 2% or less.

In another exemplary embodiment, the proportion of the Si-Fe phase based on 100% of the total phase of the silicon-based active material and metal impurity included in the negative electrode active material may be 2% or less, preferably 1.5% or less, and more preferably 1.2% or less, and may satisfy 0.005% or more, 0.007% or more, or 0.01% or more.

In the present application, a proportion of the Si-Fe-Ti phase based on 100% of the total phase of the silicon-based active material and metal impurity included in the negative electrode active material may be 2% or less.

In another exemplary embodiment, the proportion of the Si-Fe-Ti phase based on 100% of the total phase of the silicon-based active material and metal impurity included in the negative electrode active material may be 2% or less, preferably 1.5% or less, and more preferably 1.3% or less, or 0.7% or less, and may satisfy 0.005% or more, 0.007% or more, or 0.01% or more.

In the present application, there is provided the negative electrode active material in which a proportion of the Si-Fe phase and the Si-Fe-Ti phase based on 100% of the total phase of the silicon-based active material and metal impurity included in the negative electrode active material is 3% or less.

In another exemplary embodiment, the proportion of the Si-Fe phase and the Si-Fe-Ti phase based on 100% of the total phase of the silicon-based active material and metal impurity included in the negative electrode active material may be 3% or less, preferably 2% or less, and more preferably 1.7% or less, and 0.005% or more, or 0.1% or more.

That is, the negative electrode active material according to the present application has such main features that the content of metal impurity is within the above range through the manufacturing process described below, and at the same time, the proportion of the Si-Fe phase or Si-Fe-Ti phase based on 100% of the total phase of the silicon-based active material and metal impurity included in the negative electrode active material is controlled to be within the above range.

If a mixture of two or more types of acids is not used during the manufacturing process described below, the content of metal impurities may be reduced to the above range, but the proportion of the Si-Fe phase or the Si-Fe-Ti phase cannot be controlled. That is, the present application controls the proportion of the Si-Fe phase or the Si-Fe-Ti phase to fall within the above range by applying a mixture of two or more types of acids in the acid-cleaning process, thereby preventing cell short-circuits caused by precipitation of metal foreign materials, ensuring a lithium-ion pathway to enhance life performance, and enabling provision of a negative electrode with a high energy density through increased capacity of the negative electrode active material itself.

In an exemplary embodiment of the present application, there is provided the negative electrode active material in which a discharge capacity of the negative electrode active material is 3600 mAh/g or higher and 3700 mAh/g or less. In an exemplary embodiment of the present application, a charge capacity of the negative electrode active material may be 3850 mAh/g or higher and 3950 mAh/g or less.

In an exemplary embodiment of the present application, an initial efficiency of the negative electrode active material may be 93% or higher.

When $SiO_2$ is present in the negative electrode, oxygen reacts with lithium, causing the initially charged lithium to become irreversible. Therefore, in the manufacturing process described below, the acid includes, particularly HF, allowing $SiO_2$ inside and outside silicon to be etched, which makes it possible to increase the initial charge/discharge efficiency of the silicon-based active material. Additionally, the inactive Si-Fe phase or Si-Fe-Ti phase, which does not participate in the reaction and only accounts for the weight of the silicon-based active material itself, can be efficiently removed with a specific acid, enabling the capacity per weight of the negative electrode active material itself to fall within the above range.

The present application provides a method for manufacturing a negative electrode active material, including the steps of: preparing a silicon raw material; pulverizing the silicon raw material; and acid-cleaning the pulverized silicon raw material, in which the acid-cleaning includes adding an acid to the pulverized silicon raw material, and the acid is a mixture of two or more different types of acids.

It has been recognized that metal impurities pose a problem when using silicon-based negative electrodes, and methods of the related art have addressed this issue by removing metals using magnetic force. However, for silicon-based active materials, the silicon-based raw material undergoes a pulverization process, and during this process, metal foreign materials may be included due to friction between the milling machine and the silicon-based raw material. Further, the silicon-based raw material itself may also contain metal foreign materials with weak magnetism. Consequently, removing the metal using magnetic force is not easy.

Accordingly, the present application includes the step of performing acid cleaning after pulverization of the silicon-based raw material. In particular, a mixture of two or more different types of acids is used as the acid, enabling effective removal of metal impurities and impurities of a specific phase.

In an exemplary embodiment of the present application, there is provided the method for manufacturing a negative electrode active material in which the acid includes at least hydrofluoric acid (HF).

In another exemplary embodiment, the acid is a mixture of two different types of acids, and the acid may include at least hydrofluoric acid (HF).

In particular, it was found through research that the inclusion of hydrofluoric acid (HF) as described above enables the effective removal of the Si-Fe phase or the Si-Fe-Ti phase. That is, when the acid is a mixture of two types of acids and includes at least hydrofluoric acid (HF), $SiO_2$ inside and outside silicon is etched, thereby increasing the initial charge/discharge efficiency of the silicon-based active material. Additionally, the inactive Si-Fe phase or Si-Fe-Ti phase, which does not participate in the reaction and only accounts for the weight of the silicon-based active material itself, can be efficiently removed with a specific acid.

However, if only one type of acid (e.g. HCl, sulfuric acid, or the like) is used, it cannot perform the above-mentioned functions and fails to efficiently remove the specific phase, which causes problems in the negative electrode.

In the present application, the acid may include two or more selected from the group consisting of HCl, $HNO_3$, $H_2SO_4$, $CH_3COOH$, and HF, and may include at least hydrofluoric acid (HF).

In an exemplary embodiment of the present application, the hydrofluoric acid may have a concentration of 1% or higher and 10% or less based on an aqueous solution.

In another exemplary embodiment, the hydrofluoric acid may have a concentration of 1% or higher and 10% or less, or 2% or higher and 7% or less based on an aqueous solution.

By controlling the concentration of hydrofluoric acid to fall within an optimal range as described above, the Si-Fe phase or Si-Fe-Ti phase can be efficiently removed.

In an exemplary embodiment of the present application, there is provided a negative electrode composition including the negative electrode active material described above, a negative electrode conductive material, and a negative electrode binder.

In an exemplary embodiment of the present application, there is provided the negative electrode composition in which the silicon-based active material is included in an amount of 60 parts by weight or more on the basis of 100 parts by weight of the negative electrode composition.

In another exemplary embodiment, the silicon-based active material may be included in an amount of 60 parts by weight or more, preferably 63 parts by weight or more, more preferably 65 parts by weight or more, and further preferably 70 parts by weight or more, and 95 parts by weight or less, preferably 90 parts by weight or less, and more preferably 85 parts by weight or less, on the basis of 100 parts by weight of the negative electrode composition.

The negative electrode composition according to the present application uses the negative electrode active material satisfying the specific surface area size capable of controlling the volume expansion rate during charging and discharging even when the silicon-based active material having a significantly high capacity is used within the above range. Accordingly, even when the silicon-based active material is within the above range, the negative electrode composition does not degrade the performance of the negative electrode and has excellent output characteristics in charging and discharging.

In the related art, it is general to use only graphite-based compounds as the negative electrode active material. However, in recent years, as the demand for high-capacity batteries is increasing, attempts to mix and use silicon-based active materials are increasing in order to increase capacity. However, in the case of a silicon-based active material, even when the characteristics of the silicon-based active material itself are adjusted as described above, the volume may rapidly expand during charging and discharging, thereby causing some problems of damaging the conductive path formed in the negative electrode active material layer.

Therefore, in an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a point-like or spherical conductive material that may be used for improving conductivity of the negative electrode and has conductivity without causing a chemical change. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less.

In an exemplary embodiment of the present application, a content of the functional group (volatile matter) of the point-like conductive material may fall within a range of 0.01% or more and 1% or less, preferably 0.01% or more and 0.3% or less, and more preferably 0.01% or more and 0.1% or less.

In particular, when the content of the functional group of the point-like conductive material falls within the above range, a functional group is present on a surface of the point-like conductive material, so that the point-like conductive material can be smoothly dispersed in a solvent when water is used as the solvent. In particular, in the present invention, as the specific silicon-based active material is used, a functional group content of the point-like conductive material can be lowered, which exhibits an excellent effect in improving dispersibility.

In an exemplary embodiment of the present application, the point-like conductive material having the content of the functional group within the range described above is included together with the silicon-based active material, and the content of the functional group can be adjusted according to a degree of heat treatment of the point-like conductive material.

In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the conductive material may include a planar conductive material.

The planar conductive material improves conductivity by increasing surface contact between silicon-based particles in the negative electrode, and at the same time, can serve to suppress disconnection of the conductive path due to the volume expansion. The planar conductive material may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, an average particle diameter (D50) of the planar conductive material may be 2 to 7 $\mu$m, specifically 3 to 6 $\mu$m, and more specifically 3.5 to 5 $\mu$m. When the specified range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present application, there is provided the negative electrode composition in which the planar conductive material has a D10 of 0.5 $\mu$m or greater and 2.0 $\mu$m or less, a D50 of 2.5 $\mu$m or greater and 3.5 $\mu$m or less, and a D90 of 6.5 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 0.25 m$^2$/g or greater.

In another exemplary embodiment, the planar conductive material may have a BET specific surface area of 1 m$^2$/g or greater and 500 m$^2$/g or less, preferably 5 m$^2$/g or greater and 300 m$^2$/g or less, and more preferably 5 m$^2$/g or greater and 250 m$^2$/g or less.

For the planar conductive material of the present application, a planar conductive material with a high specific surface area or a planar conductive material with a low specific surface area may be used.

In another exemplary embodiment, the planar conductive material is a planar conductive material with a high specific surface area, and the BET specific surface area may fall within a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may fall within a range of 1 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, there is provided the negative electrode composition in which the negative electrode conductive material is included in an amount of 0.1 parts by weight or more and 40 parts by weight or less based on 100 parts by weight of the negative electrode composition.

In another exemplary embodiment, the negative electrode conductive material may be included in an amount of 0.1 part by weight or more and 40 parts by weight or less, preferably 0.2 part by weight or more and 30 parts by weight or less, more preferably 0.4 part by weight or more and 25 parts by weight or less, and most preferably 0.4 part by weight or more and 10 parts by weight or less based on 100 parts by weight of the negative electrode composition.

In an exemplary embodiment of the present application, there is provided the negative electrode composition in which the negative electrode conductive material includes a planar conductive material or a linear conductive material.

In an exemplary embodiment of the present application, there is provided the negative electrode composition in which the negative electrode conductive material includes a planar conductive material and a linear conductive material.

In an exemplary embodiment of the present application, there is provided the negative electrode composition in which the negative electrode conductive material includes 80 parts by weight or more and 99.9 parts by weight or less of the planar conductive material and 0.1 part by weight or more and 20 parts by weight or less of the linear conductive material based on 100 parts by weight of the negative electrode conductive material.

In another exemplary embodiment, the negative electrode conductive material may include 80 parts by weight or more and 99.9 parts by weight or less, preferably 85 parts by weight or more and 99.9 parts by weight or less, and more preferably 95 parts by weight or more and 98 parts by weight or less of the planar conductive material based on 100 parts by weight of the negative electrode conductive material.

In another exemplary embodiment, the negative electrode conductive material may include 0.1 part by weight or more and 20 parts by weight or less, preferably 0.1 part by weight or more and 15 parts by weight or less, and more preferably 0.2 parts by weight or more and 5 parts by weight or less of the linear conductive material based on 100 parts by weight of the negative electrode conductive material.

In an exemplary embodiment of the present application, the negative electrode conductive material includes both the planar conductive material and the linear conductive material, each satisfying the composition and ratio described above, so the service life characteristics of a conventional lithium secondary battery are not significantly affected, and particularly, the inclusion of both the planar conductive material and the linear conductive material increases the number of points where charging and discharging are possible, leading to excellent output characteristics at a high C-rate and a reduction in gas generation at high temperatures.

In an exemplary embodiment of the present application, the negative electrode conductive material may be composed of a linear conductive material.

In particular, when a linear conductive material is used alone, the electrode tortuosity, which is a problem of silicon-based negative electrodes, can be simplified, making it possible to improve the electrode structure, and accordingly, to reduce the migration resistance of lithium ions in the electrode.

In an exemplary embodiment of the present application, when the negative electrode conductive material includes a linear conductive material alone, the negative electrode conductive material may be included in an amount of 0.1 part by weight or more and 5 parts by weight or less, preferably 0.2 part by weight or more and 3 parts by weight or less, and more preferably 0.4 part by weight or more and 1 part by weight or less based on 100 parts by weight of the negative electrode composition.

The negative electrode conductive material according to the present application has a completely different configuration from that of a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a planar or plate-like shape, and may be expressed as plate-like graphite. That is, the planar conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, has a point-like shape, and a BET specific surface area thereof may fall within a range of 0.1 $m^2/g$ or greater and 4.5 $m^2/g$ or less. In addition, plate-like graphite, which is a planar conductive material, has a planar shape, and a BET specific surface area thereof may be 5 $m^2/g$ or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure during volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, and more preferably 20 parts by weight or less, and 5 parts by weight or more, and 10 parts by weight or more based on 100 parts by weight of the negative electrode composition.

In an exemplary embodiment of the present application, there is provided a negative electrode for a lithium secondary battery including: a negative electrode current collector layer; and a negative electrode active material layer including the negative electrode composition according to the present application or a cured product thereof formed on one surface or both surfaces of the negative electrode current collector layer.

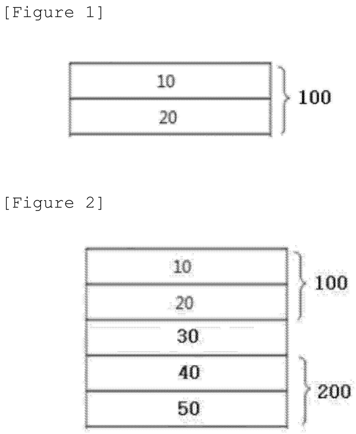

FIG. 1 is a view showing a stack structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface of the negative electrode current collector layer, but the negative electrode active material layer may be formed on both surfaces of the negative electrode current collector layer.

In an exemplary embodiment of the present application, the negative electrode for a lithium secondary battery may be formed by applying and drying a negative electrode slurry including the negative electrode composition to one surface or both surfaces of the negative electrode current collector layer.

In this case, the negative electrode slurry may include the negative electrode composition described above, and a slurry solvent.

In an exemplary embodiment of the present application, a solid content of the negative electrode slurry may fall within a range of 5% or more and 40% or less.

In another exemplary embodiment, the solid content of the negative electrode slurry may fall within a range of 5% or more and 40% or less, preferably 7% or more and 35% or less, and more preferably 10% or more and 30% or less.

The solid content of the negative electrode slurry may refer to a content of the negative electrode composition included in the negative electrode slurry, and may refer to a content of the negative electrode composition based on 100 parts by weight of the negative electrode slurry.

When the solid content of the negative electrode slurry falls within the above range, the viscosity is appropriate during formation of the negative electrode active material layer, so that particle agglomeration of the negative electrode composition is minimized to efficiently form the negative electrode active material layer.

In an exemplary embodiment of the present application, the slurry solvent can be used without limitation as long as it can dissolve the negative electrode composition, and specifically, water or NMP may be used.

In an exemplary embodiment of the present application, the negative electrode current collector layer generally has a thickness of 1 $\mu$m to 100 $\mu$m. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, there is provided the negative electrode for a lithium secondary battery in which a thickness of the negative electrode current collector layer is 1 $\mu$m or greater and 100 $\mu$m or less and a thickness of the negative electrode active material layer is 5 $\mu$m or greater and 500 $\mu$m or less.

However, the thickness may be variously modified depending on a type and a use of negative electrode used, and is not limited thereto.

In an exemplary embodiment of the present application, a porosity of the negative electrode active material layer may fall within a range of 10% or greater and 60% or less.

In another exemplary embodiment, the porosity of the negative electrode active material layer may fall within a range of 10% or greater and 60% or less, preferably 20% or greater and 50% or less, and more preferably 30% or greater and 45% or less.

The porosity varies depending on compositions and contents of the silicon-based active material, the conductive material, and the binder included in the negative electrode active material layer, and in particular, satisfies the range described above when the silicon-based active material and the conductive material are included in the specific compositions and contents according to the present application, so that the electrode has electric conductivity and resistance within appropriate ranges.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 2 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stacked structure with a separator 30 interposed therebetween.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder, together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration pathway for lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**<Preparation of Silicon-Based Active Material>**

**<Example 1>**

The raw material MG-Si 553 (metallurgical silicon purity 98.7 wt%, Fe 0.5 wt%, Al 0.5 wt%, Ca 0.3 wt%) was pulverized through three stages of Jaw Crusher (several millimeters in size) - Disk mill (several tens to hundreds of $\mu$m) - Spiral Jet mill (0 to several tens of nm), and then Si material with a center particle size of 4 to 5 $\mu$m was fabricated through an air classifier.

Thereafter, 500 g of an aqueous solution containing 25 wt% of hydrochloric acid and 5 wt% of hydrofluoric acid was prepared, and 200 g of the pulverized Si material was added to the aqueous solution. Thereafter, a Magnetic Stirrer was used to stir the aqueous solution at 250 rpm for 5 hours while maintaining the temperature at 60°C. Thereafter, a centrifuge was used to perform washing three times with distilled water, removing any residual metal foreign materials and acid components from the surface of the silicon particles, followed by a drying process, resulting in preparation of a negative electrode active material.

**<Example 2>**

The raw material MG-Si 553 (metallurgical silicon purity 98.7 wt%, Fe 0.5 wt%, Al 0.5 wt%, Ca 0.3 wt%) was pulverized through three stages of Jaw Crusher (several millimeters in size) - Disk mill (several tens to hundreds of $\mu$m) - Spiral Jet mill (0 to several tens of nm), and then Si material with a center particle size of 4 to 5 $\mu$m was fabricated through an air classifier.

Thereafter, 500 g of an aqueous solution containing 25 wt% of hydrochloric acid and 5 wt% of hydrofluoric acid was prepared, and 200 g of the pulverized Si material was added to the aqueous solution. Thereafter, a Magnetic Stirrer was used to stir the aqueous solution at 250 rpm for 5 hours while maintaining the temperature at 25°C. Thereafter, a centrifuge was used to perform washing three times with distilled water, removing any residual metal foreign materials and acid components from the surface of the silicon particles, followed by a drying process, resulting in preparation of a negative electrode active material.

**<Example 3>**

The raw material MG-Si 553 (metallurgical silicon purity 98.7 wt%, Fe 0.5 wt%, Al 0.5 wt%, Ca 0.3 wt%) was pulverized through three stages of Jaw Crusher (several millimeters in size) - Disk mill (several tens to hundreds of $\mu$m) - Spiral Jet mill (0 to several tens of nm), and then Si material with a center particle size of 4 to 5 $\mu$m was fabricated through an air classifier.

Thereafter, 500 g of an aqueous solution containing 25 wt% of hydrochloric acid and 5 wt% of hydrofluoric acid was prepared, and 200 g of the pulverized Si material was added to the aqueous solution. Thereafter, a Magnetic Stirrer was used to stir the aqueous solution at 250 rpm for 1 hours while maintaining the temperature at 60°C. Thereafter, a centrifuge was used to perform washing three times with distilled water, removing any residual metal foreign materials and acid components from the surface of the silicon particles, followed by a drying process, resulting in preparation of a negative electrode active material.

**<Example 4>**

The raw material SiC (silicon carbon composite, purity 99.5 wt%, Fe 0.2 wt%, Al 0.2 wt%, Ca 0.1 wt%) was pulverized through three stages of Jaw Crusher (several millimeters in size) - Disk mill (several tens to hundreds of $\mu$m) - Spiral Jet mill (0 to several tens of nm), and then Si material with a center particle size of 4 to 7 $\mu$m was fabricated through an air classifier.

Thereafter, 500 g of an aqueous solution containing 25 wt% of hydrochloric acid and 5 wt% of hydrofluoric acid was prepared, and 200 g of the pulverized Si material was added to the aqueous solution. Thereafter, a Magnetic Stirrer was used to stir the aqueous solution at 250 rpm for 1 hours while maintaining the temperature at 60°C. Thereafter, a centrifuge was used to perform washing three times with distilled water, removing any residual metal foreign materials and acid components from the surface of the silicon particles, followed by a drying process, resulting in preparation of a negative electrode active material.

**<Example 5>**

The raw material SiO (silicon oxide, purity 99.7 wt%, Fe 0.1 wt%, Al 0.15 wt%, Ca 0.05 wt%) was pulverized through three stages of Jaw Crusher (several millimeters in size) - Disk mill (several tens to hundreds of $\mu$m) - Spiral Jet mill (0 to several tens of nm), and then Si material with a center particle size of 1 to 3 $\mu$m was fabricated through an air classifier.

Thereafter, 500 g of an aqueous solution containing 25 wt% of hydrochloric acid and 5 wt% of hydrofluoric acid was prepared, and 200 g of the pulverized Si material was added to the aqueous solution. Thereafter, a Magnetic Stirrer was used to stir the aqueous solution at 250 rpm for 1 hours while maintaining the temperature at 60°C. Thereafter, a centrifuge was used to perform washing three times with distilled water, removing any residual metal foreign materials and acid components from the surface of the silicon particles, followed by a drying process, resulting in preparation of a negative electrode active material.

**<Comparative Example 1>**

A negative electrode active material was prepared in the same manner as in Example 1, except that distilled water was used for washing instead of the aqueous solution containing hydrochloric acid and hydrofluoric acid in Example 1.

**<Comparative Example 2>**

A negative electrode active material was prepared in the same manner as in Example 1, except that 500 g of an aqueous solution containing 25 wt% of a hydrochloric acid was prepared and used for washing instead of the aqueous solution containing hydrochloric acid and hydrofluoric acid in Example 1.

**<Comparative Example 3>**

A negative electrode active material was prepared in the same manner as in Example 1, except for the processes of Example 1 in which 500 g of an aqueous solution containing 25 wt% of a hydrochloric acid and 5 wt% of a hydrofluoric acid was prepared, 200 g of pulverized Si material was added to the aqueous solution, and a Magnetic Stirrer was used to stir the aqueous solution at 250 rpm for 5 hours while maintaining the temperature at 60°C. That is, this Comparative Examples corresponds to a case where the acid-cleaning process is not included.

The proportions of the Si-Fe phase and the Si-Fe-Ti phase in the negative electrode active materials according to the Examples and Comparative Examples are as shown in Table 1 below.

[Table 1]

|  | Si-Fe phase | Si-Fe-Ti phase |
|---|---|---|
| Example 1 | 0.32% | 0.11% |
| Example 2 | 1.15% | 0.53% |
| Example 3 | 0.71% | 0.24% |
| Example 4 | 0.12% | 0.05% |
| Example 5 | 0.06% | 0.03% |
| Comparative Example 1 | 5.98% | 1.34% |

(continued)

|  | Si-Fe phase | Si-Fe-Ti phase |
|---|---|---|
| Comparative Example 2 | 2.53% | 0.98% |
| Comparative Example 3 | 2.17% | 0.84% |

The proportions of the Si-Fe phase and the Si-Fe-Ti phase in Table 1 above refer to the weight proportions based on the total phase included in the negative electrode active material.

These proportions are determined by setting an area of the silicon active material within a defined size region using EDS mapping and specifying the proportion of the corresponding phase within the area.

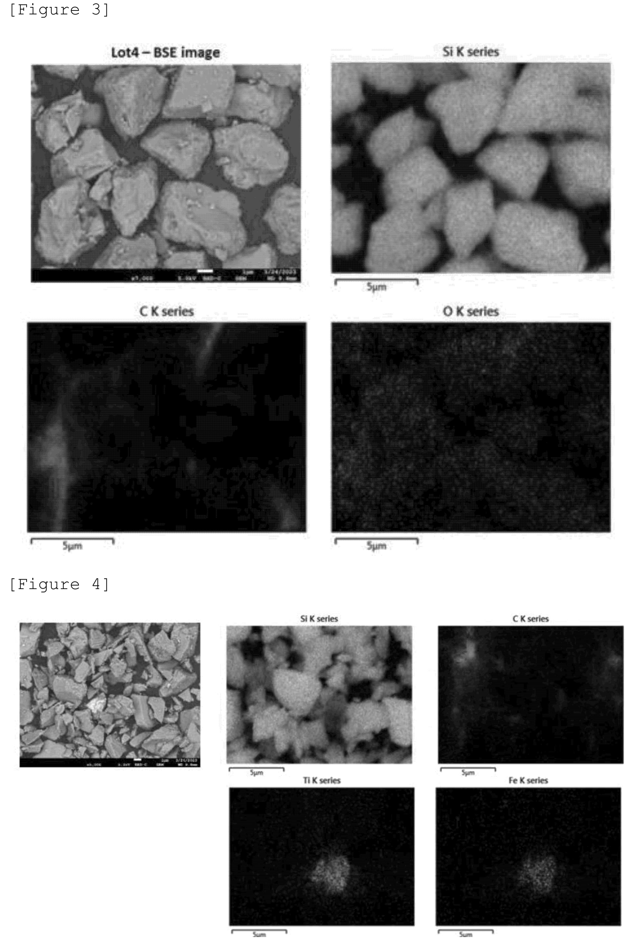

Specifically, FIG. 3 shows EDS analysis images according to Example 1, and it can be confirmed that no other metal foreign material other than Si or O was detected. For reference, C comes from carbon tape. FIG. 4 is a diagram showing EDS analysis images according to Comparative Example 1. In FIG. 4, it can be confirmed that Si, Ti, and Fe are observed at the same locations.

**<Experimental Example>**

**Experimental Example 1: Results of Monocell Life Performance**

For the secondary batteries including the negative electrodes manufactured in the Examples and Comparative Examples, the life and capacity retention rate were evaluated using an electrochemical charging and discharging device. The in-situ cycle test was conducted on the secondary battery at 4.2-3.0 V 1 C/0.5 C, and during the test, 0.33 C/0.33 C charging/discharging (4.2-3.0 V) was performed every 50 cycles to measure the capacity retention rate, and results thereof are listed in Table 2.

Life retention rate (%) = {(discharge capacity at $N^{th}$ cycle)/(discharge capacity at first cycle)} $\times$ 100

[Table 2]

|  | Life retention rate (%) after 200 cycles |
|---|---|
| Example 1 | 89 |
| Example 2 | 83 |
| Example 3 | 85 |
| Example 4 | 92 |
| Example 5 | 89 |
| Comparative Example 1 | 77 |
| Comparative Example 2 | 79 |
| Comparative Example 3 | 80 |

**Experimental Example 2: Discharge Capacity and Initial Efficiency Evaluation**

The above prepared negative electrode and the lithium metal thin film cut into a circular shape as the positive electrode were used. A lithium coin half-cell was prepared by injecting an electrolyte solution with the corresponding positive and negative electrodes.

In the evaluation method, the prepared lithium ion secondary battery was charged at 0.1 C-rate (0.1 C constant current charge, 5 mV constant voltage charge, and 0.005 C cut off) and discharged at a constant current of 0.1 C-rate (1.5 V cut off), and then the discharge capacity was measured. The discharge capacity was calculated based on the weight of the negative electrode active material, and the capacity expression rate was calculated according to the following formula.

Charging conditions: CC (constant current)/CV (constant voltage) (5 mV/0.005 C Current cut-off)
Discharging conditions: CC (constant current) condition 1.5V

Based on the results of one charge/discharge cycle, the discharge capacity (mAh/g) and the initial efficiency (%) were derived, and the results are shown in Table 3.

[Table 3]

| | Discharge capacity of negative electrode active material (mAh/g) | Charge capacity of negative electrode active material (mAh/g) | Initial efficiency (%) |
|---|---|---|---|
| Example 1 | 3668 | 3914 | 93.7 |
| Example 2 | 3613 | 3880 | 93.1 |
| Example 3 | 3640 | 3897 | 93.4 |
| Example 4 | 1941 | 2145 | 90.5 |
| Example 5 | 1653 | 2166 | 76.3 |
| Comparative Example 1 | 3492 | 3791 | 92.1 |
| Comparative Example 2 | 3524 | 3817 | 92.3 |
| Comparative Example 3 | 3561 | 3841 | 92.7 |

In Table 3 above, the discharge capacity (mAh/g) of the negative electrode active material was calculated as the measured discharge capacity/the loading amount of the negative electrode active material, the charge capacity (mAh/g) of the negative electrode active material was calculated as the measured charge capacity/the loading amount of the negative electrode active material, and the initial efficiency (%) was calculated as the value of (discharge capacity of the negative electrode active material (mAh/g)/charge capacity of the negative electrode active material (mAh/g)) x 100.

## Experimental Example 3: Metal Foreign Material Content Evaluation Through ICP Analysis

The type and total content of doping elements were confirmed through ICP analysis using an inductively coupled plasma optical emission spectrometer (ICP-OES, AVIO 500, Perkin-Elmer 7300).

Specifically, a certain amount of the negative electrode active material (approximately 0.01 g) was sampled and transferred to a platinum crucible, where it was completely decomposed by adding nitric acid, hydrofluoric acid, and sulfuric acid on a hot plate at 130°C. Then, the sample was confirmed to be clearly dissolved and completely cooled to room temperature.

Thereafter, a reference calibration curve was prepared by measuring the intensity of a standard liquid prepared using a standard solution (5 mg/kg) in an intrinsic wavelength of an element to be analyzed using an inductively coupled plasma atomic emission spectrometer (ICPAES, Perkin-Elmer 7300).

Thereafter, a pre-treated sample solution and a blank sample were each introduced into the apparatus, an actual intensity was calculated by measuring each intensity, the concentration of each component relative to the prepared calibration curve was calculated, and then the contents of the elements included in the prepared negative electrode active material were analyzed by converting the total sum so as to be the theoretical value. The results are shown in Table 4.

[Table 4]

| ppm (mg/kg) | Fe | Al | Ca | Ti | Zn | Ni | Cu | Cr | Co | Mg | Weight part |
|---|---|---|---|---|---|---|---|---|---|---|---|
| Example 1 | 345 | 200 | 90 | 35 | <20 | <20 | <20 | <20 | <20 | <20 | 0.08% |
| Example 2 | 920 | 350 | 200 | 210 | <20 | <20 | <20 | <20 | <20 | <20 | 0.17% |
| Example 3 | 730 | 260 | 150 | 120 | <20 | <20 | <20 | <20 | <20 | <20 | 0.14% |
| Example 4 | 197 | 123 | 37 | 43 | <20 | <20 | <20 | <20 | <20 | <20 | 0.04% |
| Example 5 | 93 | 53 | 35 | 19 | <20 | <20 | <20 | <20 | <20 | <20 | 0.02% |
| Comparative Example 1 | 4500 | 3500 | 500 | 580 | <20 | <20 | <20 | 150 | <20 | <20 | 0.94% |
| Comparative Example 2 | 2050 | 620 | 272 | 390 | <20 | <20 | <20 | <20 | <20 | <20 | 0.33% |
| Comparative Example 3 | 1530 | 440 | 190 | 310 | <20 | <20 | <20 | <20 | <20 | <20 | 0.91% |

In Table 4 above, values of 20 mg/kg or less were deemed below the detection limit and therefore considered unreliable, and they were indicated as <20. For Sn, Ba, and Zr, as they were present in trace amounts and in some cases not detected, they were not included in Table 4.

In the ICP measurements shown in Table 4, the initial weight of the sample before the acid cleaning process was measured, and the amount of each element was evaluated at the ppm level through ICP analysis. If the total content of metal foreign materials is 10,000 mg/kg or less, it can be determined to be 1% or less based on 100 parts by weight of the negative electrode active material. The corresponding parts by weight are indicated in Table 4.

As can be seen from Tables 2 to 4 above, it can be confirmed that, in the negative electrode active material according to an exemplary embodiment of the present invention, the content of metal impurity is low to a certain range or less, and at the same time, the proportion of the Si-Fe phase or Si-Fe-Ti phase based on 100% of the total phase of the silicon-based active material and metal impurity included in the negative electrode active material is controlled to 2% or less. That is, it was confirmed that the Examples according to the present application were evaluated higher than the Comparative Examples in the life evaluation because the proportion of the metal impurity having the above-described specific phase was within the above range, thereby preventing cell short-circuits caused by precipitation of the metal foreign materials.

In addition, in Examples 4 and 5 where a SiC composite and silicon oxide were used, respectively, it can be seen that the process of depositing silicon was included, resulting in the inclusion of fewer metal impurities compared to Examples 1 to 3. In particular, when compared with Examples 1 to 3 of the present invention, SiC or SiO exhibits less severe issues due to volume expansion than Si, so it was confirmed that the life is superior to Examples 1 to 3, and additionally, that the life performance is superior to Comparative Examples 1 to 3, which did not undergo the acid-cleaning process.

However, in Example 4 where carbon was included as a support in the silicon carbon composite, the charge capacity and the discharge capacity were measured to be lower compared with the Examples, and in Example 5 where Si and $SiO_2$ was mixed, it was confirmed that the initial efficiency was low due to the characteristics of the mixed materials. However, all of Examples 1 to 5 that underwent the acid-cleaning process exhibited superior life performance compared to the Comparative Examples.

In addition, for silicon-based active materials, it is important to simplify a lithium-ion pathway (tortuosity). The Si-Fe phase or the Si-Fe-Ti phase corresponds to an electrochemically inactive phase and is present as an obstacle in the electrode. However, the negative electrode active material according to the present application undergoes a cleaning process using two or more types of acids and satisfies the above-mentioned proportion. As a result, silicon in the upper layer portion of the electrode is not concentratedly used, and lithium ions can diffuse well to the vicinity of the current collector of the electrode, leading to an improvement in the life performance of the negative electrode.

Additionally, the Si-Fe phase or Si-Fe-Ti phase, when included in the silicon-based active material, causes a problem of a decrease in the capacity per gram of the silicon-based active material itself. However, as can be seen in Table 3, in Examples 1 to 3 according to the present application, it was confirmed that no decrease in the capacity per gram of the silicon-based active material itself occurred compared to Comparative Examples 1 to 3, thereby enabling high energy density, increased life, and suppression of dendrite formation.

**Claims**

1. A negative electrode active material comprising:

   a silicon-based active material; and
   a metal impurity,
   wherein a proportion of a Si-Fe phase or a Si-Fe-Ti phase based on 100% of a total phase of the silicon-based active material and metal impurity included in the negative electrode active material is 2% or less.

2. The negative electrode active material of claim 1, wherein the silicon-based active material comprises $SiO_x$ (x=0), $SiO_x$ (0 < x < 2), a SiC composite or a Si alloy.

3. The negative electrode active material of claim 1, wherein the silicon-based active material comprises one or more selected from the group consisting of $SiO_x$ (x=0) and $SiO_x$ (0 < x < 2), and comprises 90 parts by weight or more of the $SiO_x$ (x=0) based on 100 parts by weight of the silicon-based active material.

4. The negative electrode active material of claim 1, wherein the metal impurity is included in an amount of 0.2 part by weight or less based on 100 parts by weight of the negative electrode active material.

5. The negative electrode active material of claim 1, wherein the metal impurity comprises one or more selected from the group consisting of Fe, Al, and Ca.

6. The negative electrode active material of claim 1, wherein a proportion of the Si-Fe phase and the Si-Fe-Ti phase based on 100% of the total phase of the silicon-based active material and metal impurity included in the negative electrode active material is 2% or less.

7. The negative electrode active material of claim 1, wherein the silicon-based active material has a crystal grain size of 1 nm or greater and 200 nm or less.

8. The negative electrode active material of claim 1, wherein the negative electrode active material has a discharge capacity of 3600 mAh/g or higher and 3700 mAh/g or less.

9. A method for manufacturing a negative electrode active material, the method comprising:

preparing a silicon raw material;
pulverizing the silicon raw material; and
acid-cleaning the pulverized silicon raw material,
wherein the acid-cleaning comprises adding an acid to the pulverized silicon raw material, and the acid is a mixture of two or more different types of acids.

10. The method of claim 9, wherein the acid comprises at least a hydrofluoric acid (HF).

11. The method of claim 10, wherein the hydrofluoric acid has a concentration of 1% or higher and 10% or less based on an aqueous solution.

12. A negative electrode composition comprising:

the negative electrode active material of any one of claims 1 to 8;
a negative electrode conductive material; and
a negative electrode binder.

13. The negative electrode composition of claim 12, wherein the negative electrode active material is included in an amount of 60 parts by weight or more based on 100 parts by weight of the negative electrode composition.

14. The negative electrode composition of claim 12, wherein the negative electrode conductive material comprises one or more selected from the group consisting of a planar conductive material and a linear conductive material.

15. A negative electrode for a lithium secondary battery, comprising:

a negative electrode current collector layer; and
a negative electrode active material layer provided on one surface or both surfaces of the negative electrode current collector layer,
wherein the negative electrode active material layer comprises the negative electrode composition of claim 12 or a cured product thereof.

16. The negative electrode for a lithium secondary battery of claim 15, wherein a thickness of the negative electrode current collector layer is 1 $\mu$m or greater and 100 $\mu$m or less, and
wherein a thickness of the negative electrode active material layer is 5 $\mu$m or greater and 500 $\mu$m or less.

17. A lithium secondary battery comprising:

a positive electrode;
the negative electrode for a lithium secondary battery of claim 15;
a separator provided between the positive electrode and the negative electrode; and
an electrolyte.

[Figure 1]

[Figure 2]

[Figure 3]

[Figure 4]

# EP 4 712 163 A1

## INTERNATIONAL SEARCH REPORT

| International application No. |
|---|
| **PCT/KR2024/096381** |

| A. | CLASSIFICATION OF SUBJECT MATTER |
|---|---|

**H01M 4/38**(2006.01)i; **H01M 4/48**(2010.01)i; **H01M 4/62**(2006.01)i; **H01M 4/134**(2010.01)i; **C01B 33/113**(2006.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/38(2006.01); C25B 1/00(2006.01); C25B 11/04(2006.01); H01M 10/052(2010.01); H01M 4/134(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘(silicon), 음극 활물질(negative electrode active material), 금속 불순물 (metal impurity), 리튬 이차 전지(lithium secondary cell)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2208279 B1 (CHUNGBUK NATIONAL UNIVERSITY INDUSTRY-ACADEMIC COOPERATION FOUNDATION) 27 January 2021 (2021-01-27) See claims 1, 10, 13 and 14; paragraphs [0024], [0080], [0130], [0132], [0141], [0144], [0147], [0188] and [0191]-[0194]; and figures 5-8. | 1-17 |
| A | KR 10-2016-0040103 A (LG CHEM, LTD.) 12 April 2016 (2016-04-12) See claims 11-21. | 1-17 |
| A | KR 10-2012-0010211 A (KNU-INDUSTRY COOPERATION FOUNDATION) 02 February 2012 (2012-02-02) See claims 21-33. | 1-17 |
| A | KR 10-1971498 B1 (LG CHEM, LTD.) 23 April 2019 (2019-04-23) See claims 8 and 17-19. | 1-17 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 February 2025** | **12 February 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/096381** |

| C. | DOCUMENTS CONSIDERED TO BE RELEVANT | |
| --- | --- | --- |
| Category* | Citation of document, with indication, where appropriate, of the relevant passages | Relevant to claim No. |
| A | 원하연 등. 마그네슘 열환원법을 통한 규조토 나노구조 실리콘의 리튬이온전지 음극 응용 연구. New Physics: Sae Mulli. 2016, vol. 66, no. 2, pp. 140-144 (WON, Hayeon et al. Nanostructured Silicon Anodes Fabricated by Using Magnesiothermic Reduction for Lithium-ion Batteries.) <br> See entire document. | 1-17 |

Form PCT/ISA/210 (second sheet) (July 2022)

# EP 4 712 163 A1

| INTERNATIONAL SEARCH REPORT<br>Information on patent family members | | International application No.<br>**PCT/KR2024/096381** |

| Patent document<br>cited in search report | Publication date<br>(day/month/year) | Patent family member(s) | | | Publication date<br>(day/month/year) |
|---|---|---|---|---|---|
| KR 10-2208279 B1 | 27 January 2021 | None | | | |
| KR 10-2016-0040103 A | 12 April 2016 | CN | 107112519 | A | 29 August 2017 |
| | | CN | 107112519 | B | 11 September 2020 |
| | | EP | 3203550 | A1 | 09 August 2017 |
| | | EP | 3203550 | B1 | 03 July 2019 |
| | | JP | 2017-536645 | A | 07 December 2017 |
| | | JP | 6517326 | B2 | 22 May 2019 |
| | | US | 10637051 | B2 | 28 April 2020 |
| | | US | 2017-0309902 | A1 | 26 October 2017 |
| | | WO | 2016-053032 | A1 | 07 April 2016 |
| KR 10-2012-0010211 A | 02 February 2012 | None | | | |
| KR 10-1971498 B1 | 23 April 2019 | CN | 107735888 | A | 23 February 2018 |
| | | CN | 107735888 | B | 29 December 2020 |
| | | EP | 3355388 | A1 | 01 August 2018 |
| | | EP | 3355388 | B1 | 29 July 2020 |
| | | US | 11075369 | B2 | 27 July 2021 |
| | | US | 2018-0151868 | A1 | 31 May 2018 |
| | | US | 2021-0313557 | A1 | 07 October 2021 |
| | | WO | 2017-052278 | A1 | 30 March 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230140879
- JP 2009080971 A